(19) **Europäisches Patentamt / European Patent Office / Office européen des brevets**

(11) **EP 4 162 298 B1**

(12) # FASCICULE DE BREVET EUROPEEN

(45) Date de publication et mention
de la délivrance du brevet:
**09.07.2025   Bulletin 2025/28**

(21) Numéro de dépôt: **21725221.2**

(22) Date de dépôt: **18.05.2021**

(51) Classification Internationale des Brevets (IPC):
**G01S 17/58** (2006.01)     **G01S 17/95** (2006.01)
**G01S 7/48** (2006.01)     **G01P 5/26** (2006.01)

(52) Classification Coopérative des Brevets (CPC):
**G01S 17/58; G01S 7/4808; G01S 17/95;**
Y02A 90/10; Y02E 10/72

(86) Numéro de dépôt international:
**PCT/EP2021/063082**

(87) Numéro de publication internationale:
**WO 2021/249728 (16.12.2021 Gazette 2021/50)**

(54) **PROCEDE DE DETERMINATION DES COMPOSANTES DE LA VITESSE DU VENT AU MOYEN D'UN CAPTEUR DE TELEDETECTION PAR LASER**

VERFAHREN ZUR BESTIMMUNG VON WINDGESCHWINDIGKEITSKOMPONENTEN MITTELS EINES LASER-FERNSENSORS

METHOD FOR DETERMINING WIND SPEED COMPONENTS BY MEANS OF A LASER REMOTE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.06.2020  FR 2005939**

(43) Date de publication de la demande:
**12.04.2023   Bulletin 2023/15**

(73) Titulaire: **IFP Energies nouvelles
92500 Rueil-Malmaison (FR)**

(72) Inventeurs:
• **GUILLEMIN, Fabrice
92852 RUEIL-MALMAISON CEDEX (FR)**
• **GOUSSAULT, Romain
92852 RUEIL-MALMAISON CEDEX (FR)**
• **SABIRON, Guillaume
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**US-A1- 2019 293 836**

• **KNUDSEN T: "Prediction models for wind speed at turbine locations in a wind farm", vol. 14, no. 7, 30 September 2011 (2011-09-30), pages 877 - 894, XP009525286, ISSN: 1095-4244, Retrieved from the Internet <URL:https://api.wiley.com/ onlinelibrary/tdm/v1/articles/10.1002% 2Fwe.491> [retrieved on 20110808], DOI: 10.1002/ WE.491**
• **HYUN-GOO KIM ET AL: "Correction of LiDAR measurement error in complex terrain by CFD: Case study of the Yangyang pumped storage plant", WIND ENGINEERING., vol. 41, no. 4, 1 August 2017 (2017-08-01), GB, pages 226 - 234, XP055547081, ISSN: 0309-524X, DOI: 10.1177/ 0309524X17709725**
• **SUVIRE G O ET AL: "Wind farm: Dynamic model and impact on a weak power system", TRANSMISSION AND DISTRIBUTION CONFERENCE AND EXPOSITION: LATIN AMERICA, 2008 IEEE/PES, IEEE, PISCATAWAY, NJ, USA, 13 August 2008 (2008-08-13), pages 1 - 8, XP031346051, ISBN: 978-1-4244-2217-3**

- **P. TOWERS ET AL: "Real-time wind field reconstruction from LiDAR measurements using a dynamic wind model and state estimation : LiDAR wind field estimation", WIND ENERGY, vol. 19, no. 1, 21 November 2014 (2014-11-21), GB, pages 133 - 150, XP055451329, ISSN: 1095-4244, DOI: 10.1002/we.1824**

## Description

### Domaine technique

La présente invention concerne le domaine de la détermination des composantes de la vitesse du vent, notamment dans le but d'évaluer l'opportunité d'installer une éolienne sur un site.

Avant l'installation d'une éolienne, ou d'une ferme d'éolienne, il est nécessaire d'évaluer le potentiel du vent sur ce site. En effet, la taille de l'éolienne, sa classe et sa structure dépendent de caractéristiques du vent, telles que la vitesse moyenne du vent, la vitesse maximale du vent, l'intensité de la turbulence du vent (qui correspond au rapport de l'écart-type de la vitesse du vent sur la vitesse moyenne du vent), etc. Par exemple, la taille de l'éolienne peut être choisie en fonction de la répartition de la valeur moyenne du vent, et la classe de l'éolienne peut être choisie en fonction de l'intensité de la turbulence. Etant donné que le changement d'une classe d'éolienne à une autre a un coût significatif, il est important de bien connaître les caractéristiques du vent avant l'installation d'une éolienne.

De plus, cette détermination de composantes de la vitesse du vent est tout particulièrement critique puisqu'elle permet également de connaitre la ressource productrice d'énergie. Ceci est important pour les projets éoliens, puisque cela conditionne également la fiabilité financière du projet d'installation d'éolienne.

### Technique antérieure

Afin de réaliser ces mesures, la technique classique est l'installation d'un mât de mesure sur le site des mesures. Un tel mât de mesure est équipé d'un nombre importants de capteurs, et une installation spécifique ce qui implique un coût important, et n'est pas facile à déplacer d'un site à l'autre en raison de ces dimensions.

Selon une deuxième technique, on peut utiliser un capteur LiDAR (acronyme de l'expression en langue anglaise « light detection and ranging » pouvant être traduite par télédétection par Laser) (de l'anglais «light amplification by stimulated emission of radiation »). Le LiDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LiDAR utilise de la lumière visible ou infrarouge au lieu d'ondes radio.

Dans le domaine des éoliennes, le capteur LiDAR est annoncé comme étant un capteur indispensable au bon fonctionnement des grandes éoliennes, tout particulièrement alors que leur taille et leur puissance augmentent (aujourd'hui, 5 MW, bientôt 12 MW en offshore). Ce capteur permet la mesure à distance du vent, permettant dans un premier temps de calibrer les éoliennes pour qu'elles puissent fournir une puissance maximum (optimisation de la courbe de puissance). Pour cette étape de calibration, le capteur LiDAR peut être positionné au sol et orienté verticalement (profiler), ce qui permet de mesurer la vitesse de vent et sa direction, ainsi que le gradient de vent selon les altitudes. On peut appeler cette technique LIDAR posé.

Cette technique est décrite notamment dans les demandes de brevet EP3287810 et US2019293836.

Toutefois, il est important de prévoir un traitement des signaux de mesure, afin d'obtenir des caractéristiques de la vitesse du vent de manière précise, robuste et fiable.

La mesure radiale ne donne pas accès à une mesure complète du vent. C'est une projection du vent sur l'axe de visée du faisceau, filtrée par la fonction de transfert spatiale inhérente à la technologie de mesure LiDAR, et bruitée par la chaîne de mesure. Pour obtenir une information représentative du champs de vent passant au-dessus du LiDAR posé, il est ainsi nécessaire de combiner plusieurs mesures radiales entre elles, et de les associer à un traitement capable de restituer la contribution du vent dans chaque mesure et d'en dériver un champ ou vecteur vent.

Les reconstructions standard se basent sur l'hypothèse que la mesure radiale contient uniquement un contenu cohérent avec le vent mesuré, et que le champ de vent est uniforme et homogène à un altitude donnée.

### Résumé de l'invention

La présente invention a pour but de déterminer les composantes de la vitesse du vent, de manière précise, robuste et fiable et de manière peu onéreuse. Pour cela, l'invention concerne un procédé de détermination des composantes de la vitesse du vent au moyen d'un capteur LiDAR posé. Pour ce procédé, on approxime dans un premier temps les composantes de la vitesse du vent au moyen des signaux du capteur LiDAR, on utilise ces approximations dans un modèle de signal de vent, puis dans un filtre de Kalman non stationnaire, pour construire des signaux de mesure filtrés. Les signaux de mesure filtrés sont ensuite utilisés pour reconstruire les composantes de la vitesse du vent. L'approximation des composantes de la vitesse du vent permettent de construire un modèle du signal du vent fiable et robuste, ce qui permet une détermination des composantes de la vitesse du vent fiable et robuste. En effet, en filtrant la mesure radiale pour n'en retenir que la partie correspondant effectivement à la contribution du vent à la mesure, le procédé permet d'obtenir une estimation du vent (amplitude et direction) dont la moyenne et l'écart-type seront plus représentatifs et réalistes. Cela permet ainsi d'utiliser un LiDAR posé en remplacement ou en complément d'un mât de mesure, afin d'effectuer des analyses de site performantes, précises et potentiellement moins couteuses.

L'invention concerne un procédé de détermination des composantes de la vitesse du vent au moyen d'un capteur LiDAR, ledit capteur LiDAR étant orienté sensiblement verticalement pour réaliser les mesures dans au moins un plan de mesure sensiblement horizontal. Pour ce procédé, on met en œuvre les étapes suivantes :

a) On acquiert des signaux de mesure dudit capteur LiDAR dans ledit au moins un plan de mesure ;
b) On détermine une approximation des composantes de la vitesse du vent dans ledit au moins un plan de mesure au moyen d'une reconstruction géométrique desdites composantes de la vitesse du vent à partir desdits signaux de mesure acquis ;
c) On détermine, dans ledit au moins un plan de mesure, une vitesse moyenne et un écart-type du vent au moyen desdites composantes de la vitesse du vent approximées;
d) On construit un modèle du signal du vent par la somme de deux filtres du premier ordre, en l'occurrence la somme d'un intégrateur et d'un filtre passe-bas, ledit modèle du signal du vent étant dépendant de deux paramètres ;
e) On détermine lesdits deux paramètres dudit modèle du signal du vent au moyen dudit écart-type et de la vitesse moyenne du vent déterminés ;
f) On filtre lesdits signaux de mesure acquis au moyen d'un filtre de Kalman non stationnaire, dudit modèle du signal du vent et desdits deux paramètres déterminés ; et
g) On détermine les composantes de la vitesse du vent dans ledit au moins un plan de mesure, au moyen d'une reconstruction desdites composantes de la vitesse du vent à partir desdits signaux de mesures filtrés.

Selon un mode de réalisation, le procédé comprend une étape de filtrage desdits signaux mesures par un filtre passe bas d'ordre un pour l'étape d'approximation desdites composantes de la vitesse du vent.

Avantageusement, ledit modèle de signal de vent correspond à un modèle de Kaimal du spectre du vent.

$$H = \frac{a}{s} + \frac{b}{s+\tau}$$

Selon un aspect, une fonction de transfert H dudit modèle de signal du vent s'écrit  avec a, b lesdits deux paramètres, s la variable de Laplace, et $\tau$ la constante du temps.

De préférence, lesdits paramètres a et b s'obtiennent par l'équation :  $\left[ \begin{matrix} a^2 \\ (a+b)^2 \end{matrix} \right] = \left[ \begin{matrix} \frac{\tau^2}{\omega^4 + \tau^2 \omega^2} & \frac{\omega^2}{\omega^4 + \tau^2 \omega^2} \end{matrix} \right]^{-1} \cdot (\vec{L}.\overrightarrow{S(f, \sigma_k, Vhub)})$ avec f le vecteur fréquence, $\omega = 2\pi f$, k l'indice correspondant à composante concernée, $\sigma_k$ l'écart-type de la vitesse du vent approximée, $V_{hub}$ la vitesse du vent approximée, L le vecteur des composantes de la direction du faisceau de mesure du capteur LiDAR, S le vecteur des composantes spectrales du modèle de Kaimal du spectre du vent.

Conformément à une mise en œuvre, on détermine la matrice de covariance dudit filtre de Kalman non stationnaire par une minimisation d'une fonction de coût prenant en compte la dispersion et la déviation moyenne desdits signaux de mesure.

Conformément à un mode de réalisation, la reconstruction des composantes de la vitesse du vent au moyen des signaux de mesure filtrés par ledit filtre de Kalman non stationnaire est mise en œuvre au moyen d'une reconstruction géométrique desdites composantes de la vitesse du vent à partir desdits signaux de mesure filtrés par ledit filtre de Kalman non stationnaire.

Selon un aspect, le procédé comprend en outre les étapes suivantes :

a) On segmente lesdites composantes de la vitesse du vent déterminées par intervalle de temps prédéterminé ; et
b) On détermine au moins une caractéristique de ladite vitesse du vent pour ledit intervalle de temps prédéterminé.

De manière avantageuse, ledit intervalle de temps prédéterminé est compris entre 1 min et 1h, et de préférence entre 5 min et 30 min.

Avantageusement, ladite au moins une caractéristique du vent est choisie parmi : la moyenne de la vitesse du vent, l'écart-type de la vitesse du vent, le maximum de la vitesse du vent, la moyenne de la direction du vent, l'intensité de la turbulence du vent, la moyenne de la composante verticale de la vitesse du vent, et l'écart-type de la composante verticale de la vitesse du vent.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre un capteur LiDAR posé selon un mode de réalisation de l'invention.

La figure 2 illustre les étapes du procédé selon un premier mode de réalisation de l'invention.

La figure 3 illustre les étapes du procédé selon un deuxième mode de réalisation de l'invention.

La figure 4 illustre les étapes du procédé selon un troisième mode de réalisation de l'invention.

La figure 5 illustre le paramétrage géométrique en un point de mesure.

**Description des modes de réalisation**

La présente invention concerne un procédé de détermination des composantes de la vitesse du vent au moyen d'un capteur LiDAR. On appelle composantes de la vitesse du vent, les projections de la vitesse du vent dans un repère, notamment dans un repère orthonormé.

Pour l'invention, le capteur LiDAR est dirigé sensiblement verticalement, en d'autres termes, la mesure est dirigée selon un axe sensiblement vertical. Par exemple, le capteur LiDAR peut être posé sur le sol et orienté verticalement. Selon l'invention, le capteur LiDAR permet de mesurer la vitesse du vent sur au moins un plan de mesure. Au vu de l'orientation du capteur LiDAR, le plan de mesure est sensiblement horizontal. Il existe plusieurs types de capteur LiDAR, par exemple les capteurs LiDAR scannés, LiDAR continus ou LiDAR pulsés. Dans le cadre de l'invention, on utilise de préférence un LiDAR pulsé. Cependant, les autres technologies de LiDAR peuvent être utilisées tout en restant dans le cadre de l'invention.

Le capteur LiDAR permet une mesure en continu. Par conséquent, l'utilisation d'un tel capteur, permet une détermination en continu de signaux de mesure. De plus, le capteur LiDAR est facilement déplaçable d'un site à un autre. Par exemple, le taux d'échantillonnage du capteur LiDAR peut être compris entre 0.1 et 5Hz (voire plus dans le futur), et peut valoir 1 Hz. De plus, le capteur LiDAR permet d'obtenir des informations relatives en plusieurs plans de mesure à plusieurs hauteurs. Par conséquent, le capteur LiDAR peut être utilisé pour la détermination des composantes de vitesse du vent à plusieurs hauteurs, ce qui peut servir notamment à la détermination de la variation de la vitesse du vent en fonction de la hauteur.

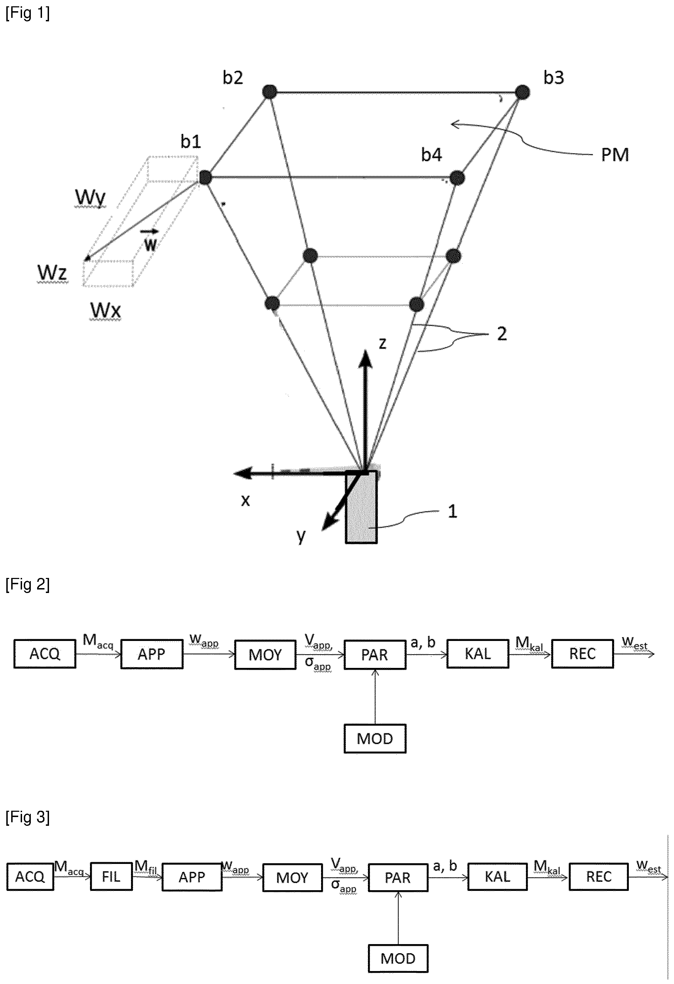

La figure 1 représente, de manière schématique et non limitative, un capteur LiDAR 1 posé et orienté verticalement pour le procédé selon un mode de réalisation de l'invention. Le capteur LiDAR 1 est utilisé pour obtenir au moins un signal de mesure sur au moins un plan de mesure PM (seulement deux plans de mesure sont représentés). Sur cette figure, sont représentés également les axes x, y et z. Le point de référence de ce repère est le centre du capteur LiDAR. La direction x est une direction horizontale. La direction y, perpendiculaire à la direction x, est une deuxième direction horizontale (les directions x, y forment un plan horizontal). La direction z est la direction verticale (correspondant à la direction de mesure du capteur LiDAR 1) dirigée vers le haut, l'axe z est perpendiculaire aux axes x et y. Les plans de mesure PM sont des plans formés par les directions x, y à une distance du capteur LiDAR 1 (pour une valeur de z non nulle). Les plans de mesure PM sont parallèles entre eux. Comme visible à la figure 1, qui est un exemple de réalisation d'un capteur LiDAR pulsé, le capteur LiDAR 1 utilisé comporte quatre faisceaux ou axes de mesures 2. Les faisceaux de mesure 2 sont inclinés par rapport à l'axe vertical z. De manière non limitative, le procédé selon l'invention fonctionne également avec un capteur LiDAR comportant un nombre quelconque de faisceaux. Le capteur LiDAR réalise une mesure ponctuelle en chaque point de mesure (b1, b2, b3, b4) qui sont des points d'intersection d'un plan de mesure PM et d'un faisceau 2. Ces points de mesure (b1, b2, b3, b4) sont représentés par des cercles noirs sur la figure 1.

Sur cette figure, est également représenté uniquement au point b1 le vecteur de la vitesse du vent W, et ces trois composantes Wx, Wy, Wz respectivement sur les axes x, y et z.

Le procédé selon l'invention est exposé dans le jeu de revendications joint et est résumé par les étapes suivantes :

1- acquisition des signaux de mesure
2- approximation des composantes de la vitesse du vent
3- détermination de la vitesse moyenne et de l'écart type
4- construction du modèle fréquentiel du signal du vent
5- détermination des paramètres du modèle
6- filtre de Kalman non stationnaire

7- détermination des composantes de la vitesse du vent

Ces étapes seront détaillées dans la suite de la description. Les étapes 2 à 7 peuvent être mises en œuvre par des moyens informatiques, notamment un ordinateur. Les étapes 2 à 7 peuvent être mise en œuvre hors ligne après l'étape 1.

La figure 2 illustre, schématiquement et de manière non limitative les étapes du procédé selon un premier mode de réalisation de l'invention. Dans un premier temps, on acquiert ACQ les signaux de mesure $M_{acq}$ du capteur LiDAR. Ensuite, on approxime APP les composantes de la vitesse du vent $W_{app}$ par une reconstruction géométrique des signaux de mesures $M_{acq}$. Les composantes de la vitesse du vent $W_{app}$ sont ensuite utilisées pour déterminer MOY la moyenne $V_{app}$ et l'écart-type $\sigma_{app}$ de la vitesse du vent. Ces données sont utilisées avec le modèle du signal de vent MOD construit, pour déterminer PAR les paramètres a et b de ce modèle du signal de vent. Ensuite, on applique un filtre de Kalman non stationnaire KAL pour obtenir des signaux de mesure filtrés $M_{kal}$. Ces signaux de mesure $M_{kal}$ permettent une reconstruction REC des composantes de la vitesse du vent $W_{est}$.

Selon un deuxième mode de réalisation de l'invention, le procédé peut comprendre une étape supplémentaire de filtrage des signaux de mesure acquis avant l'approximation des composantes de la vitesse du vent, afin de supprimer les valeurs aberrantes, ce qui permet d'augmenter la robustesse et la fiabilité du procédé.

Ainsi, le procédé selon le deuxième mode de réalisation de l'invention peut comporter les étapes suivantes :

1- acquisition des signaux de mesure

1.2- filtrage des signaux de mesure

2- approximation des composantes de la vitesse du vent

3- détermination de la vitesse moyenne et de l'écart type

4- construction du modèle fréquentiel du signal du vent

5- détermination des paramètres du modèle

6- filtre de Kalman non stationnaire

7- détermination des composantes de la vitesse du vent

Ces étapes seront détaillées dans la suite de la description. Les étapes 1.2 à 7 peuvent être mises en œuvre par des moyens informatiques, notamment un ordinateur.

La figure 3 illustre, schématiquement et de manière non limitative les étapes du procédé selon le deuxième mode de réalisation de l'invention. Dans un premier temps, on acquiert ACQ les signaux de mesure $M_{acq}$ du capteur LiDAR. Dans un deuxième temps on filtre FIL les signaux de mesure $M_{acq}$ pour obtenir les signaux filtrés de mesure $M_{fil}$. Ensuite, on approxime APP les composantes de la vitesse du vent $W_{app}$ par une reconstruction géométrique des signaux de mesures filtrés $M_{fil}$. Les composantes de la vitesse du vent $W_{app}$ sont ensuite utilisées pour déterminer MOY la moyenne $V_{app}$ et l'écart-type $\sigma_{app}$ de la vitesse du vent. Ces données sont utilisées avec le modèle du signal de vent MOD construit, pour déterminer PAR les paramètres a et b de ce modèle du signal de vent. Ensuite, on applique un filtre de Kalman non stationnaire KAL pour obtenir des signaux de mesure filtrés $M_{kal}$. Ces signaux de mesure $M_{kal}$ permettent une reconstruction REC des composantes de la vitesse du vent $W_{est}$.

Selon un troisième mode de réalisation de l'invention, le procédé peut comprendre des étapes supplémentaires pour déterminer une caractéristique de la vitesse du vent. Pour ce troisième mode de réalisation, le procédé peut comprendre les étapes suivantes :

1- acquisition des signaux de mesure

2- approximation des composantes de la vitesse du vent

3- détermination de la vitesse moyenne et de l'écart type

4- construction du modèle du signal du vent

5- détermination des paramètres du modèle

6- filtre de Kalman non stationnaire

7- détermination des composantes de la vitesse du vent

8- segmentation des composantes de la vitesse du vent

9- détermination d'une caractéristique de la vitesse du vent

Ces étapes seront détaillées dans la suite de la description. Les étapes 2 à 9 peuvent être mises en œuvre par des moyens informatiques, notamment un ordinateur.

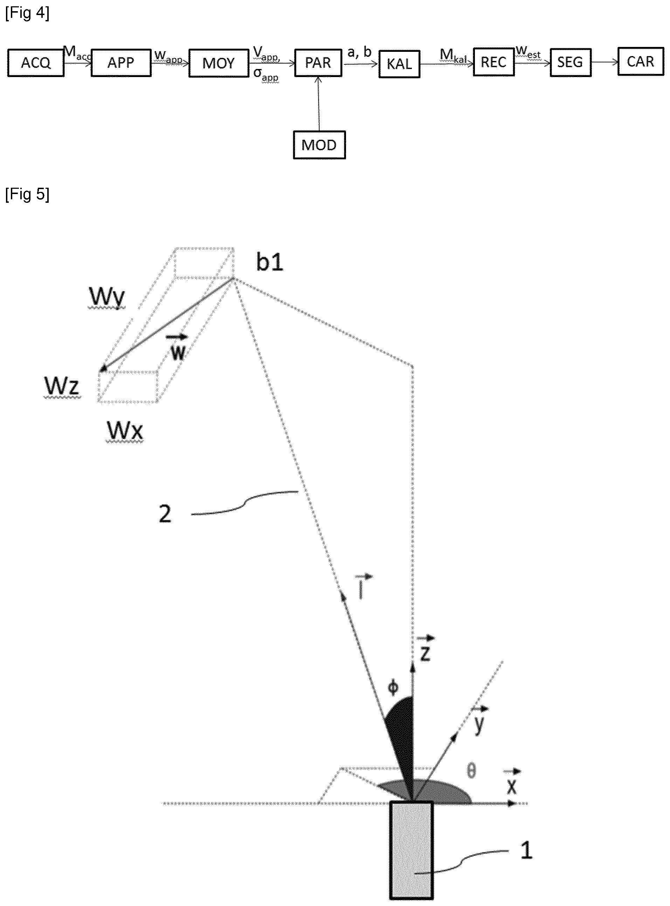

La figure 4 illustre, schématiquement et de manière non limitative les étapes du procédé selon un troisième mode de réalisation de l'invention. Dans un premier temps, on acquiert ACQ les signaux de mesure $M_{acq}$ du capteur LiDAR. Ensuite, on approxime APP les composantes de la vitesse du vent $W_{app}$ par une reconstruction géométrique des signaux de mesures $M_{acq}$. Les composantes de la vitesse du vent $W_{app}$ sont ensuite utilisées pour déterminer MOY la moyenne $V_{app}$ et l'écart-type $\sigma_{app}$ de la vitesse du vent. Ces données sont utilisées avec le modèle du signal de vent MOD construit, pour déterminer PAR les paramètres a et b de ce modèle du signal de vent. Ensuite, on applique un filtre de Kalman non stationnaire KAL pour obtenir des signaux de mesure filtrés $M_{kal}$. Ces signaux de mesure $M_{kal}$ permettent une reconstruction REC des composantes de la vitesse du vent $W_{est}$. On réalise une segmentation SEG temporelle de ces composantes de la vitesse du vent $W_{est}$. Puis, on détermine un caractéristique CAR de la vitesse du vent (par exemple la vitesse moyenne du vent, ou l'intensité de turbulence).

Les deuxième et troisième modes de réalisation peuvent être combinés.


1- Acquisition des signaux de mesure

Lors de cette étape, on acquiert les signaux de mesure du capteur LiDAR pour au moins un plan de mesure. En d'autres termes, pour chaque point de mesure d'au moins un plan de mesure on acquiert le signal de mesure issu du capteur. Avantageusement, ces signaux de mesures peuvent être enregistrés, notamment sur une mémoire informatique pour pouvoir être traités par des moyens informatiques dans les étapes suivantes.

Afin de déterminer les composantes de la vitesse du vent en plusieurs plans de mesure, on peut réaliser cette étape pour plusieurs plans de mesure.

De manière avantageuse, l'acquisition des signaux de mesure peut être réalisée sur un temps long, par exemple pour une durée pouvant varier de plusieurs jours et aller jusqu'à une année, voire plus.


1.2- Filtrage des signaux de mesure

On rappelle qu'il s'agit d'une étape facultative. Lors de cette étape, on filtre les signaux de mesure, notamment pour limiter les valeurs aberrantes dans un but de rendre le procédé plus fiable et robuste.

Selon un mode de réalisation, on peut mettre en œuvre ce filtrage au moyen d'un filtre passe-bas d'ordre un afin de restituer une représentation continue et réaliste de l'état de vent mesuré. Il peut s'agir d'un filtre à constante de temps variable. Plus la dernière valeur valide passée au filtre d'ordre un est ancienne, plus la constante de temps du filtre diminue (en d'autres termes, le poids de l'état mémorisé dans le filtre est de plus en plus faible par rapport au poids de la prochaine valeur valide t). Par ce mode de réalisation, on dérive une valeur instantanée, basse fréquence, débruitée et réaliste de l'état de vent contenu dans les mesures radiales.


2- Approximation des composantes de la vitesse du vent

Lors de cette étape, on approxime les composantes de la vitesse du vent à partir des signaux de mesure du capteur LiDAR, ou le cas échéant à partir des signaux de mesure filtrés du capteur LiDAR. Cette approximation est utilisée pour adapter le modèle du signal de mesure. Il s'agit que d'une approximation pour une étape intermédiaire, les valeurs des composantes de la vitesse du vent déterminées lors de l'étape 7 du procédé sont plus précises, fiables et robustes.

Pour cette étape, on reconstruit les composantes de la vitesse du vent au moyen d'une reconstruction géométrique.

Conformément à un mode de réalisation de l'invention, la reconstruction géométrique des composantes de la vitesse du vent peut mettre en œuvre une opération pseudo-inverse « Moore-Penrose » appliquée aux signaux de mesure (ou le cas échéant aux signaux de mesure filtrés).

La figure 5 illustre, schématiquement et de manière non limitative, un paramétrage géométrique des signaux de mesure d'un capteur LiDAR. Sur cette figure, un seul faisceau 2 d'un capteur LiDAR 1 est représenté. Ce faisceau 2 est orienté selon un axe de mesure représenté par le vecteur I. Ce vecteur I est orienté par rapport au repère x, y, z (défini de la même manière que pour la figure 1) au moyen des angles θ et Φ. L'angle θ est défini dans le plan (x, y) par rapport à l'axe x. L'angle Φ est défini par rapport à l'axe z. Sur cette figure, on représente également le vecteur de vitesse du vent W et ces composantes Wx, Wy, Wz au point de mesure b1.

Au moyen des projections géométriques, on peut écrire l'équations suivantes :

$$
\begin{bmatrix} m_1 \\ \vdots \\ m_i \\ \vdots \\ m_n \end{bmatrix} = \overbrace{\begin{bmatrix} sin(\phi_1)cos(\theta_1) & sin(\phi_1)sin(\theta_1) & cos(\phi_1) \\ & \vdots & \\ sin(\phi_i)cos(\theta_1) & sin(\phi_i)sin(\theta_1) & cos(\phi_i) \\ & \vdots & \\ sin(\phi_n)cos(\theta_n) & sin(\phi_n)sin(\theta_n) & cos(\phi_n) \end{bmatrix}}^{M} \begin{bmatrix} w_x \\ w_y \\ w_z \end{bmatrix}
$$

Avec 1, ..., i, ..., n les points de mesures d'un plan de mesure, m1,..., mi, ..., mn les signaux de mesure du plan de mesure.

Au moyen de l'opération pseudo-inverse « Moore-Penrose », on peut donc obtenir les composantes de la vitesse du vent estimées dans le plan de mesure au moyens des signaux de mesure :

$$
\begin{bmatrix} w_x \\ w_y \\ w_z \end{bmatrix} = (M^T.M)^{-1}.M^T.\begin{bmatrix} m_1 \\ \vdots \\ m_n \end{bmatrix}
$$

Conformément à une mise en œuvre de l'invention, cette étape peut comprendre une étape de filtrage de la vitesse estimée. notamment pour limiter les valeurs aberrantes dans un but de rendre le procédé plus fiable et robuste.

Selon un mode de réalisation, on peut mettre en œuvre ce filtrage au moyen d'un filtre passe-bas d'ordre un afin de restituer une représentation continue et réaliste de l'état de vent mesuré. Il peut s'agir d'un filtre à constante de temps variable. Plus la dernière valeur valide passée au filtre d'ordre un est ancienne, plus la constante de temps du filtre diminue (en d'autres termes le poids de l'état mémorisé dans le filtre est de plus en plus faible par rapport au poids de la prochaine valeur valide). Par ce mode de réalisation, on dérive une valeur instantanée, basse fréquence, débruitée et réaliste de l'état de vent contenu dans les mesures radiales.

### 3- Détermination de la vitesse moyenne et de l'écart type

Lors de cette étape, on détermine, à partir de l'approximation des composantes de la vitesse du vent déterminées à l'étape 2 (éventuellement filtrée), la vitesse moyenne et son écart type. Pour cette étape, on peut mettre en œuvre les calculs de moyenne et d'écart type classiques.

Selon un mode de réalisation de l'invention, la vitesse moyenne et son écart type peuvent être déterminés sur un horizon de temps glissant. Par exemple, l'horizon de temps glissant pour ce mode de réalisation peut être compris entre 10 minutes et plusieurs jours.

### 4- Construction du modèle du signal du vent

Lors de cette étape, on construit un modèle du signal du vent par la somme de deux filtres du premier ordre, le modèle du signal du vent étant dépendant de deux paramètres. Les deux paramètres permettent de régler les contributions de chaque filtre à la mesure fournie par le capteur LiDAR.

Selon l'invention le modèle du signal du vent comprend un intégrateur et un filtre passe-bas. L'intégrateur permet d'illustrer la vitesse moyenne et la variation lente de la vitesse du vent. Le filtre passe-bas permet de modéliser la turbulence instantanée, avec une constante de temps approximant la réponse fréquentielle du spectre de la turbulence du vent, tel que défini dans la norme IEC61400-1. La somme des deux filtres permet de modéliser un signal de densité spectrale de puissance DSP cohérente avec le modèle de Kaimal défini dans la norme. La fonction de transfert H correspondant à la modélisation de la DSP peut être donnée par (la fonction H est également appelé dans la suite de la description modèle su signal du vent) :

$$H = \frac{a}{s} + \frac{b}{s+\tau} = \frac{(a+b)s + a.\tau}{s^2 + \tau.s} = \begin{bmatrix} \dfrac{\tau}{s^2 + \tau.s} & \dfrac{s}{s^2 + \tau.s} \end{bmatrix} \cdot \begin{bmatrix} a \\ a+b \end{bmatrix}$$

Avec a et b les paramètres du modèle du signal du vent, s est la variable de Laplace, et $\tau$ la constante de temps.

Ainsi, selon un mode de réalisation de l'invention, le modèle de signal de vent peut correspondre au modèle de Kaimal, qui peut s'écrire :

$$\frac{f\, S_k(f)}{\sigma_k^2} = \frac{4f\, L_k\, /\, V_{hub}}{(1 + 6f\, L_k\, /\, V_{hub})^{5/3}}$$

Avec k l'indice qui correspond à la composante considérée (k varie entre 1 et 3 et représente les axes z, y et x), f la fréquence, $V_{hub}$ la vitesse moyenne du vent obtenue à l'étape 3, $\sigma$ la composante de la déviation standard, $S_k$ est le spectre de la composante de vitesse dans la direction k, $L_k$ un paramètre d'échelle intégrale de la composante de la vitesse.

De plus, on a la relation :

$$\sigma_k^2 = \int_0^\infty S_k(f)df$$

Et le paramètre $\sigma_k$ est relié à l'écart-type déterminé à l'étape précédente, en fonction de la composante considérée. Par exemple, pour l'axe z, $\sigma_1$ peut valoir l'écart-type, pour l'axe y, $\sigma_2$ peut valoir 0,8 fois l'écart-type, et pour l'axe x, $\sigma_3$ peut valoir 0,5 fois l'écart-type.

Le paramètre L peut être lié à un paramètre d'échelle.

En variante, le procédé selon l'invention est adapté à d'autres modèles de vent, tels que le modèle de « Von Karman ».

5- Détermination des paramètres du modèle

Lors de cette étape, on détermine les paramètres du modèle du signal du vent au moyen de l'écart-type et de la vitesse moyenne du vent déterminés à l'étape 3. Ainsi, à la fin de cette étape, le modèle du signal du vent est adapté aux mesures réalisées par le capteur LiDAR, ce qui permet de rendre la détermination des composantes des vitesses du vent précis.

Selon le mode de réalisation de la fonction de transfert H décrite ci-dessus, on détermine les paramètres a et b de la fonction de transfert. On peut déterminer les paramètres a, et b, au moyen de l'équation suivante :

$$|H|^2 = \begin{bmatrix} \dfrac{\tau^2}{\omega^4 + \tau^2\omega^2} & \dfrac{\omega^2}{\omega^4 + \tau^2\omega^2} \end{bmatrix} \cdot \begin{bmatrix} a^2 \\ (a+b)^2 \end{bmatrix} \approx \vec{L}.\overrightarrow{S(f,\sigma_k,V_{hub})}$$

Dans laquelle le vecteur L est le vecteur des composantes de la direction du faisceau de mesure concerné, et S est le vecteur des composantes spectrales du modèle de Kaimal, qui dépendent de paramètres connus, notamment la vitesse moyenne du vent et l'écart-type déterminés à l'étape 3.

Ainsi, on peut estimer les paramètres a et b par l'équation :

$$\begin{bmatrix} a^2 \\ (a+b)^2 \end{bmatrix} = \begin{bmatrix} \dfrac{\tau^2}{\omega^4 + \tau^2\omega^2} & \dfrac{\omega^2}{\omega^4 + \tau^2\omega^2} \end{bmatrix}^{-1} \cdot \left( \vec{L}.\overrightarrow{S(f,\sigma_k,V_{hub})} \right)$$

6- Filtre de Kalman non stationnaire

Lors de cette étape, on filtre les signaux de mesure obtenus à l'étape 1 au moyen d'un filtre de Kalman non stationnaire, du modèle du signal du vent construit à l'étape 4 et des paramètres du modèle du signal du vent déterminés à l'étape 5. Ainsi, on obtient des signaux de mesures filtrés adaptés à la détermination précise des composantes de la vitesse du vent, de manière robuste. On rappelle qu'un filtre de Kalman est un filtre à réponse impulsionnelle infinie qui estime les états d'un système dynamique à partir d'une série de mesures incomplètes ou bruitées. Le filtre est dit non stationnaire car le modèle embarqué dans le filtre de Kalman, explicité notamment aux étapes 4 et 5, décrit un signal à variance et moyenne a priori variables, selon les conditions de mesure et les caractéristiques du vent mesuré.

Pour cela, on peut formuler la fonction de transfert H dans l'espace d'état continu de la manière suivante :

$$\begin{cases} \dot{X} = A.X + B.U \\ Y = C.X + D.U \end{cases}$$

Avec

$$A = \begin{pmatrix} -\tau & 0 \\ 1 & 0 \end{pmatrix}, B = \begin{pmatrix} 1 \\ 0 \end{pmatrix}, C = \begin{pmatrix} a+b \\ a.\tau \end{pmatrix} et\ D = \begin{pmatrix} 0 \\ 0 \end{pmatrix}$$

X contient les états de la fonction de transfert H et

Y contient l'estimation de la contribution du vent à la mesure radiale brute et bruitée. Y est donc la mesure radiale filtrée, en d'autres termes le signal de mesure filtré par le filtre de Kalman non stationnaire.

En discrétisant cette fonction de transfert, on peut écrire :

$$X_{k+1} = A.X_k + B.U_k$$
$$Y_k = C.X_k + D.U_k$$

Avec

$$A = \begin{pmatrix} e^{-\tau.T_s} & 0 \\ \frac{1-e^{-\tau.T_s}}{\tau} & 0 \end{pmatrix}, B = \begin{pmatrix} \frac{1-e^{-\tau.T_s}}{\tau} \\ T_s - \frac{1-e^{-\tau.T_s}}{\tau} \\ \frac{\phantom{x}}{\tau} \end{pmatrix}, C = \begin{pmatrix} a+b \\ a.\tau \end{pmatrix} et\ D = \begin{pmatrix} 0 \\ 0 \end{pmatrix}$$

Avec Ts le temps d'échantillonnage de la discrétisation.

Pour cette étape, on peut également mettre en œuvre les équations de récurrence suivantes :

A l'instant k, la prédiction de l'état à l'instant k+1 est notée $x_{k+1|k}$, et la sortie prédite est notée $y_{k+1|k}$ avec $x_{k+1|k} = Ax_{k|k}$ $y_{k+1|k} = CAx_{k|k}$.

La confiance dans cette prédiction, correspondant à la covariance de l'erreur sur l'état est la suivante : $P_{k+1|k} = AP_{k|k}A^T + BQ_kB^T$ avec Q la matrice de covariance.

Ainsi, cette prédiction donne la valeur la plus probable de l'état et de la sortie.

A l'instant k+1, on met à jour la prédiction avec la mesure :

$$x_{k+1|k+1} = x_{k+1|k} + K_{k+1}\left(y_{k+1} - y_{k+1|k}\right)$$

Le gain K peut être donné par :

$$K = P_{k+1|k} * C^T * \left(Ck+1|kC^T + DQ_{k+1}D^T + V_{k+1}\right)$$

Il est alors possible de mettre à jour la matrice de la prédiction :

$$P_{k+1|k+1} = (I - K_{k+1}P_{k+1|k}C)P_{k+1|k}$$

Selon un mode de réalisation de l'invention, on peut déterminer la matrice de covariance du filtre de Kalman non stationnaire par une minimisation d'une fonction de coût prenant en compte la dispersion et la déviation moyenne des signaux de mesure. La philosophie du réglage de la matrice de covariance se résume ainsi : Plus le site est complexe, plus le modèle est incertain, plus le « bruit de procédé » (correspondant à la matrice de covariance) est élevé.

Par exemple, on peut mettre en œuvre les opérations suivantes :

- Le prérequis : on dispose de données de mesure du capteur LiDAR et de données dites de référence, par exemple issues d'un mât de mesure anémométrique. Le capteur LiDAR posé peut être positionné suffisamment proche du mât de mesure pour que les mesures respectives soit corrélées.
- Le principe :

  - On élabore une fonction de coût pertinente, prenant en compte la dispersion et la déviation de l'intensité de turbulence TI reconstruite par rapport à la TI issue des mesures « mât »
  - On minimise la fonction de coût par des algorithmes d'optimisation adaptés, en jouant sur le paramètre « gain multiplicatif de la matrice de covariance Q ».

De préférence, on peut ajouter des contraintes d'optimisation en fonction d'une contrainte d'erreur acceptable, par exemple cette contrainte d'erreur acceptable peut être définie selon une gamme de vitesses moyennes du vent.

7- Détermination des composantes de la vitesse du vent

Lors de cette étape, on détermine les composantes de la vitesse du vent dans au moins un plan de mesure, au moyen des signaux de mesures filtrés au moyen du filtre de Kalman non stationnaire obtenu à l'étape 6. Pour cette étape, on met en œuvre une reconstruction des composantes de la vitesse du vent à partir des signaux de mesures filtrés par le filtre de Kalman non stationnaire. Ainsi, cette étape permet de déterminer des composantes de la vitesse du vent de manière robuste et précise.

Plusieurs techniques de reconstruction, s'appuyant sur des hypothèses plus ou moins fortes d'homogénéité du vent, de cohérence spatiale, et/ou de propagation figée de la turbulence peuvent être exploitées pour cette étape.

Selon un mode de réalisation, la reconstruction des composantes de la vitesse du vent au moyen des signaux de mesure filtrés peut être mise en œuvre au moyen d'une reconstruction géométrique desdites composantes de la vitesse du vent à partir desdits signaux de mesure filtrés. En d'autres termes, pour ce mode de réalisation, on peut mettre en œuvre la méthode de reconstruction des composantes de la vitesse du vent mise en œuvre à l'étape 2, c'est-à-dire la reconstruction géométrique des composantes de la vitesse du vent mettant en œuvre une opération pseudo-inverse « Moore-Penrose » appliquée aux signaux de mesure filtrés par le filtre de Kalman non stationnaire.

8- Segmentation des composantes de la vitesse du vent

On rappelle que cette étape est facultative. Cette étape peut être mise en œuvre pour déterminer au moins une caractéristique de la vitesse du vent à partir des composantes de la vitesse du vent. Lors de cette étape, on segmente temporellement les composantes de la vitesse du vent obtenues à l'étape précédente par un intervalle de temps prédéterminé. En d'autres termes, on génère des ensembles de données des composantes de la vitesse du vent pour l'intervalle de temps prédéterminé. L'intervalle de temps prédéterminé est celui sur lequel on souhaite déterminer la caractéristique de la vitesse du vent.

Selon un mode de réalisation de l'invention, l'intervalle de temps prédéterminé peut être compris entre 1 min et 1h, de préférence entre 5 min et 30 min, et peut valoir par exemple 10 min. Ces intervalles de temps permettent d'avoir une caractéristique significative de la vitesse du vent, afin de déterminer la possibilité d'installer une éolienne sur le lieu de mesure.

9- Détermination d'une caractéristique de la vitesse du vent

On rappelle que cette étape est facultative, et suit l'étape 8. Lors de cette étape, on détermine au moins une caractéristique de la vitesse du vent sur l'intervalle de temps prédéterminé, pour au moins un plan de mesure.

Selon un mode de réalisation de l'invention, une caractéristique du vent est choisie parmi : la moyenne de la vitesse du vent (ou vitesse moyenne du vent), l'écart-type de la vitesse du vent, le maximum de la vitesse du vent, la moyenne de la direction du vent, l'intensité de la turbulence du vent, la moyenne de la composante verticale de la vitesse du vent, et l'écart-type de la composante verticale de la vitesse du vent.

De préférence, lors de cette étape, on peut déterminer au moins l'intensité de la turbulence du vent sur l'intervalle de temps prédéterminé, qui correspond au rapport de l'écart-type de la vitesse du vent sur la vitesse du vent. En effet, cette caractéristique permet de déterminer la classe de l'éolienne.

De manière préférée, on peut déterminer au moins l'intensité de la turbulence du vent sur l'intervalle de temps prédéterminé, la vitesse moyenne du vent et la direction moyenne du vent. En effet, ces caractéristiques permettent de déterminer la classe de l'éolienne, son positionnement et ses dimensions.

En outre, un procédé d'installation d'une éolienne, ledit procédé ne relevant pas de l'invention revendiquée, dans lequel on met en œuvre les étapes suivantes, est décrit :

- On détermine les composantes de la vitesse du vent, et/ou au moins une caractéristique de la vitesse du vent au moyen du procédé selon l'une quelconque des variantes ou des combinaisons de variantes précédemment décrites, en au moins un site,
- On installe une éolienne sur le site en fonction des composantes de la vitesse du vent et/ou en fonction de ladite au moins une caractéristique de la vitesse du vent.

Lors de l'étape d'installation, on peut déterminer l'éolienne installée en termes de dimensions, de classe, sa structure, on peut également déterminer son orientation, et son contrôle en fonction des composantes de la vitesse du vent et/ou en fonction de ladite au moins une caractéristique de la vitesse du vent.

Conformément audit procédé d'installation d'une éolienne, ledit procédé ne relevant pas de l'invention revendiquée, on peut répéter la première étape sur plusieurs sites. Puis, on détermine le site le plus propice à l'installation d'une éolienne en fonction des composantes de la vitesse du vent et/ou en fonction de ladite au moins une caractéristique de la vitesse du vent. Il peut s'agir notamment du site sur lequel la vitesse du vent est comprise dans une plage de fonctionnement adaptée à la récupération d'énergie par une éolienne.

## Revendications

1. Procédé de détermination des composantes de la vitesse du vent au moyen d'un capteur LiDAR (1), ledit capteur LiDAR (1) étant orienté sensiblement verticalement pour réaliser les mesures dans au moins un plan de mesure (PM) sensiblement horizontal, dans lequel on met en œuvre les étapes suivantes :

    a) On acquiert des signaux de mesure dudit capteur LiDAR (1) dans ledit au moins un plan de mesure (PM) ;
    b) On détermine une approximation (APP) des composantes de la vitesse du vent dans ledit au moins un plan de mesure (PM) au moyen d'une reconstruction géométrique desdites composantes de la vitesse du vent à partir desdits signaux de mesure acquis ;
    c) On détermine, dans ledit au moins un plan de mesure (PM), une vitesse moyenne et un écart-type du vent (MOY) au moyen desdites composantes de la vitesse du vent approximées ;
    d) On construit un modèle du signal du vent (MOD) par la somme de deux filtres du premier ordre, en l'occurrence la somme d'un intégrateur et d'un filtre passe-bas, ledit modèle du signal du vent étant dépendant de deux paramètres (a, b) ;
    e) On détermine lesdits deux paramètres (a, b) dudit modèle du signal du vent (MOD) au moyen dudit écart-type et de la vitesse moyenne du vent déterminés ;
    f) On filtre lesdits signaux de mesure acquis au moyen d'un filtre de Kalman non stationnaire (KAL), dudit modèle du signal du vent et desdits deux paramètres déterminés ; et
    g) On détermine les composantes de la vitesse du vent dans ledit au moins un plan de mesure, au moyen d'une reconstruction (REC) desdites composantes de la vitesse du vent à partir desdits signaux de mesures filtrés.

2. Procédé selon la revendication 1, dans lequel le procédé comprend une étape de filtrage (FIL) desdits signaux mesures par un filtre passe bas d'ordre un pour l'étape d'approximation desdites composantes de la vitesse du vent.

3. Procédé selon l'une des revendications précédentes, dans lequel ledit modèle de signal de vent (MOD) correspond à un modèle de Kaimal du spectre du vent.

4. Procédé selon l'une des revendications précédentes, dans lequel une fonction de transfert H dudit modèle de signal du vent (MOD) s'écrit $H = \dfrac{a}{s} + \dfrac{b}{s+\tau}$ avec a, b lesdits deux paramètres, s la variable de Laplace, et $\tau$ la constante du temps.

5. Procédé selon la revendication 4, dans lequel lesdits paramètres a et b s'obtiennent par l'équation : $\begin{bmatrix} a^2 \\ (a+b)^2 \end{bmatrix} = \begin{bmatrix} \dfrac{\tau^2}{\omega^4+\tau^2\omega^2} & \dfrac{\omega^2}{\omega^4+\tau^2\omega^2} \end{bmatrix}^{-1} . (\vec{L}.\overrightarrow{S(f,\sigma_k,V_{hub})})$ avec f le vecteur fréquence, $\omega = 2\pi f$, k l'indice correspondant à composante concernée, $\sigma_k$ l'écart-type de la vitesse du vent approximée, $V_{hub}$ la vitesse du vent approximée, L le vecteur des composantes de la direction du faisceau de mesure du capteur LiDAR, S le vecteur des composantes spectrales du modèle de Kaimal du spectre du vent.

**6.** Procédé selon l'une des revendications précédentes, dans lequel on détermine la matrice de covariance dudit filtre de Kalman non stationnaire (KAL) par une minimisation d'une fonction de coût prenant en compte la dispersion et la déviation moyenne desdits signaux de mesure.

**7.** Procédé selon des revendications précédentes, dans lequel la reconstruction (REC) des composantes de la vitesse du vent au moyen des signaux de mesure filtrés par ledit filtre de Kalman non stationnaire (KAL) est mise en œuvre au moyen d'une reconstruction géométrique desdites composantes de la vitesse du vent à partir desdits signaux de mesure filtrés par ledit filtre de Kalman non stationnaire.

**8.** Procédé selon l'une des revendications précédentes comprenant en outre les étapes suivantes :

a) On segmente (SEG) lesdites composantes de la vitesse du vent déterminées par intervalle de temps prédéterminé ; et
b) On détermine au moins une caractéristique (CAR) de ladite vitesse du vent pour ledit intervalle de temps prédéterminé.

**9.** Procédé selon la revendication 8, dans lequel ledit intervalle de temps prédéterminé est compris entre 1 min et 1h, et de préférence entre 5 min et 30 min.

**10.** Procédé selon la revendication 8 ou 9, dans lequel ladite au moins une caractéristique du vent est choisie parmi : la moyenne de la vitesse du vent, l'écart-type de la vitesse du vent, le maximum de la vitesse du vent, la moyenne de la direction du vent, l'intensité de la turbulence du vent, la moyenne de la composante verticale de la vitesse du vent, et l'écart-type de la composante verticale de la vitesse du vent.

**Patentansprüche**

**1.** Verfahren zur Bestimmung der Komponenten der Windgeschwindigkeit mittels eines LiDAR-Sensors (1), wobei der LiDAR-Sensor (1) im Wesentlichen senkrecht ausgerichtet ist, um die Messungen in mindestens einer im Wesentlichen horizontalen Messebene (PM) durchzuführen, wobei die folgenden Schritte durchgeführt werden:

a) Erfassen von Messsignalen des LiDAR-Sensors (1) in der mindestens einen Messebene (PM);
b) Bestimmen einer Approximation (APP) der Komponenten der Windgeschwindigkeit in der mindestens einen Messebene (PM) mittels einer geometrischen Rekonstruktion dieser Komponenten der Windgeschwindigkeit anhand der erfassten Messsignale;
c) Bestimmen, in der mindestens einen Messebene (PM), eines Mittelwertes und einer Standardabweichung der Windgeschwindigkeit (MOY) mittels der approximierten Komponenten der Windgeschwindigkeit;
d) Konstruieren eines Modells des Signals des Windes (MOD) durch die Summe von zwei Filtern erster Ordnung, in diesem Fall die Summe eines Integrators und eines Tiefpassfilters, wobei das Modell des Signals des Windes von zwei Parametern (a, b) abhängig ist;
e) Bestimmen der zwei Parameter (a, b) des Modells des Signals des Windes (MOD) mittels der Standardabweichung und des Mittelwertes der Windgeschwindigkeit, die bestimmt wurden;
f) Filtern der erfassten Messsignale mittels eines nichtstationären Kalman-Filters (KAL), des Modells des Signals des Windes und der bestimmten zwei Parameter; und
g) Bestimmen der Komponenten der Windgeschwindigkeit in der mindestens einen Messebene mittels einer Rekonstruktion (REC) dieser Komponenten der Windgeschwindigkeit anhand der gefilterten Messsignale.

**2.** Verfahren nach Anspruch 1, wobei das Verfahren einen Schritt des Filterns (FIL) der Messsignale durch ein Tiefpassfilter erster Ordnung für den Schritt der Approximation der Komponenten der Windgeschwindigkeit umfasst.

**3.** Verfahren nach einem der vorhergehenden Ansprüche, wobei das Windsignalmodell (MOD) einem Kaimal-Modell des Spektrums des Windes entspricht.

**4.** Verfahren nach einem der vorhergehenden Ansprüche, wobei eine Übertragungsfunktion H des Windsignalmodells (MOD) die Form $H = \frac{a}{s} + \frac{b}{s+\tau}$ hat, wobei a, b die zwei Parameter sind, s die Laplace-Variable und $\tau$ die Zeitkonstante ist.

**5.** Verfahren nach Anspruch 4, wobei die Parameter a und b durch folgende Gleichung erhalten werden:

$$\begin{bmatrix} a^2 \\ (a+b)^2 \end{bmatrix} = \begin{bmatrix} \frac{\tau^2}{\omega^4+\tau^2\omega^2} & \frac{\omega^2}{\omega^4+\tau^2\omega^2} \end{bmatrix}^{-1} \cdot \left( \vec{L}. \overrightarrow{S(f,\sigma_k,V_{hub})} \right)$$

, wobei f der Frequenzvektor ist, $\omega = 2\pi f$, k der Index ist, welcher der betreffenden Komponente entspricht, $\sigma_k$ die Standardabweichung der approximierten Windgeschwindigkeit ist, $V_{hub}$ die approximierte Windgeschwindigkeit ist, L der Vektor der Komponenten der Richtung des Messbündels des LiDAR-Sensors ist, S der Vektor der spektralen Komponenten des Kaimal-Modells des Spektrums des Windes ist.

**6.** Verfahren nach einem der vorhergehenden Ansprüche, wobei die Kovarianzmatrix des nichtstationären Kalman-Filters (KAL) durch eine Minimierung einer Kostenfunktion bestimmt wird, welche die Streuung und die mittlere Abweichung der Messsignale berücksichtigt.

**7.** Verfahren nach vorhergehenden Ansprüchen, wobei die Rekonstruktion (REC) der Komponenten der Windgeschwindigkeit mittels der durch das nichtstationäre Kalman-Filter (KAL) gefilterten Messsignale mittels einer geometrischen Rekonstruktion dieser Komponenten der Windgeschwindigkeit anhand der durch das nichtstationäre Kalman-Filter gefilterten Messsignale durchgeführt wird.

**8.** Verfahren nach einem der vorhergehenden Ansprüche, welches außerdem die folgenden Schritte umfasst:

a) Segmentieren (SEG) der bestimmten Komponenten der Windgeschwindigkeit durch ein vorbestimmtes Zeitintervall; und
b) Bestimmen mindestens einer Kenngröße (CAR) der Windgeschwindigkeit für das vorbestimmte Zeitintervall.

**9.** Verfahren nach Anspruch 8, wobei das vorbestimmte Zeitintervall zwischen 1 min und 1 h und vorzugsweise zwischen 5 min und 30 min liegt.

**10.** Verfahren nach Anspruch 8 oder 9, wobei die mindestens eine Kenngröße des Windes ausgewählt wird aus: dem Mittelwert der Windgeschwindigkeit, der Standardabweichung der Windgeschwindigkeit, dem Maximum der Windgeschwindigkeit, dem Mittelwert der Windrichtung, der Intensität der Turbulenz des Windes, dem Mittelwert der vertikalen Komponente der Windgeschwindigkeit und der Standardabweichung der vertikalen Komponente der Windgeschwindigkeit.

**Claims**

**1.** A method for determining wind speed components by way of a LiDAR sensor (1), said LiDAR sensor (1) being oriented substantially vertically in order to carry out the measurements in at least one substantially horizontal measurement plane (PM), wherein the following steps are implemented:

a) Acquiring measurement signals from said LiDAR sensor (1) in said at least one measurement plane (PM);
b) Determining an approximation (APP) of the wind speed components in said at least one measurement plane (PM) by way of a geometric reconstruction of said wind speed components based on said acquired measurement signals;
c) Determining an average speed and a standard deviation of the wind (MOY) in said at least one measurement plane (PM) by way of said approximated wind speed components;
d) Constructing a wind signal model (MOD) using the sum of two first-order filters, which is the sum of an integrator and of a low-pass filter, said wind signal model being dependent on two parameters (a, b) which are ;
e) Determining said two parameters (a, b) of said wind signal model (MOD) by way of said determined standard deviation and the determined average wind speed;
f) Filtering said acquired measurement signals by way of a non-stationary Kalman filter (KAL), said wind signal model and said two determined parameters; and
g) Determining the wind speed components in said at least one measurement plane, by way of a geometric reconstruction (REC) of said wind speed components based on said filtered measurement signals.

**2.** The method as claimed in claim 1, wherein the method comprises a step of filtering (FIL) said measurement signals using a first-order low-pass filter for the step of approximating said wind speed components.

3. The method as claimed in either of the preceding claims, wherein said wind signal model (MOD) corresponds to a Kaimal model of the wind spectrum.

4. The method as claimed in one of the preceding claims, wherein a transfer function H of said wind signal model (MOD) is written $H = \dfrac{a}{s} + \dfrac{b}{s+\tau}$ where a, b are said two parameters, s is the Laplace variable, and $\tau$ is the time constant.

5. The method as claimed in claim 4, wherein said parameters a and b are obtained using the equation:
$$\begin{bmatrix} a^2 \\ (a+b)^2 \end{bmatrix} = \begin{bmatrix} \dfrac{\tau^2}{\omega^4+\tau^2\omega^2} & \dfrac{\omega^2}{\omega^4+\tau^2\omega^2} \end{bmatrix}^{-1} . (\vec{L}.\overrightarrow{S(f,\sigma_k,V_{hub})})$$
where f is the frequency vector, $\omega = 2\pi f$, k is the index corresponding to the component in question, $\sigma_k$ is the standard deviation of the approximated wind speed, $V_{hub}$ is the approximated wind speed, L is the vector of the components of the direction of the measurement beam of the LiDAR sensor, and S is the vector of the spectral components of the Kaimal model of the wind spectrum.

6. The method as claimed in one of the preceding claims, wherein the covariance matrix of said non-stationary Kalman filter (KAL) is determined by minimizing a cost function that takes into account the dispersion and the average deviation of said measurement signals.

7. The method as claimed in one of the preceding claims, wherein the reconstruction (REC) of the wind speed components by way of the measurement signals filtered by said non-stationary Kalman filter (KAL) is implemented by way of a geometric reconstruction of said wind speed components based on said measurement signals filtered by said non-stationary Kalman filter.

8. The method as claimed in one of the preceding claims, furthermore comprising the following steps:

   a) Segmenting (SEG) said determined wind speed components by predetermined time interval; and
   b) Determining at least one characteristic (CAR) of said wind speed for said predetermined time interval.

9. The method as claimed in claim 8, wherein said predetermined time interval is between 1 min and 1 h, and preferably between 5 min and 30 min.

10. The method as claimed in claim 8 or 9, wherein said at least one wind characteristic is chosen from among: average wind speed, standard deviation of the wind speed, maximum wind speed, average wind direction, wind turbulence intensity, average of the vertical component of the wind speed, and standard deviation of the vertical component of the wind speed.

[Fig 1]

[Fig 2]

[Fig 3]

[Fig 4]

[Fig 5]

**EP 4 162 298 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3287810 A

- US 2019293836 A